Europäisches Patentamt

(19) European Patent Office

Office européen des brevets

(11) Publication number: **0 170 478**
**A2**

(12) **EUROPEAN PATENT APPLICATION**

(21) Application number: 85305183.7

(22) Date of filing: 22.07.85

(51) Int. Cl.⁴: **G 05 B 19/23**

(30) Priority: 30.07.84 GB 8419374

(43) Date of publication of application:
05.02.86 Bulletin 86/6

(84) Designated Contracting States:
CH DE FR IT LI

(71) Applicant: WESTINGHOUSE BRAKE AND SIGNAL
COMPANY LIMITED
Pew Hill
Chippenham Wiltshire(GB)

(72) Inventor: Wickham, David John
129 Malmesbury Road
Chippenham Wiltshire(GB)

(72) Inventor: Poole, John David
The Sawmills The Bottom Urchfont
Devizes Wiltshire SN10 4SF(GB)

(74) Representative: Bird, Vivian John et al,
PAGE & CO. Temple Gate House
Temple Gate Bristol, BS1 6PL(GB)

(54) An actuator system.

(57) A railway vehicle brake actuator employs an electric motor driving through a step-down gearbox to mechanically move the brake blocks. After the initial rubbing contact point the response of the system is non-linear and the motor feedback control involves compensation for said non-linearity. The motor output shaft is connected to a rotary shaft encoder so that the position of the actuator output member, and thus also the brake force applied, can be determined by pulse counting. The ideal relationship between a brake demand signal and brake force is linear. The actual relationship between actuator position and brake force is non-linear. Correction factors covering the whole operating range are stored in a memory against pulse count numbers and used as a look-up table in the feedback circuit to compensate either the feedback signal or the demand signal for the non-linearity of the response.

FIG.4a

An Actuator System

The invention relates to an actuator system, particularly a system involving an electro-mechanical type of actuator and especially a rotary electrical machine.

In actuator control systems it is known to employ closed loop feedback designs for the purpose of positional control of the actuator output member. There is not always a linear relationship between the input signal and the corresponding position of the final output member, as for example in an electric brake actuator. The output means has to move through a relatively large distance to take up clearance in the system in order to achieve rubbing contact of the friction surfaces, and thereafter there is relatively little movement as the retarding force generated is determined by the applied actuator force.

Due to inertia and momentum of the moving parts of the actuator, particularly if a rotary machine such as an electric motor is employed, it is desirable to exercise accurate control over the position of or the force exerted by the output member.

According to the present invention there is provided an actuator system comprising an actuator for moving an output member in response to an actuator input signal, and wherein the output member encounters a resistance to movement over at least part of its range of travel so that there exists a non-linear relationship between a force exerted by the member against the resistance and a demand signal, sensing means responsive to the position of the output member to provide a feedback signal, means for receiving the feedback signal, means for receiving the demand signal means operative to compensate for said non-linearity, and means for combining the feedback and demand signals to provide an error signal which is connected to provide an actuator input signal corrected in accordance with said non-linearity to produce movement of the actuator.

In one form of the invention there is provided means operative to modify the feedback signal so as to compensate the non-linearity before combination with the demand signal for the purpose of providing the actuator input signal.

In another form of the invention there is provided means operative to modify the demand signal so as to compensate the non-linearity before combination with the feedback signal for the purpose of providing the actuator input signal.

In a preferred form the system includes means operative to advance the phase of the actuating signal in accordance with a predetermined angle selected to compensate for the momentum of the actuator so as to bring the output member to a halt in the position required by the input signal. Where the actuator is a rotary electrical machine the phase advance means is arranged to select a phase advance angle proportional to the square of the rotational speed of the actuator. There may also be provided a motor speed control circuit operative to limit the rate of change of actuator output to a predetermined value.

In one embodiment of the invention the actuator system comprises a railway vehicle brake actuator in which the actuator system input signal is supplied by a train brake demand signal, and the actuator output member is connected to a brake operating lever which as a result of its movement applies the vehicle brakes directly.

The invention will now be described in greater detail with reference, by way of example only, to an embodiment which will be described with reference to the accompanying drawings, in which:

Fig. 1 shows a graph of the ideal and actual relationship between actuator position and the force exerted by the output member,

Fig. 2 shows one form of look up table employed in the actuator feedback system,

Fig. 3 shows another look up table for the actuator feedback system, and

Fig. 4a and 4b show block diagrams of the electronic circuits of two alternative forms of the invention for use in a railway vehicle brake control system.

The embodiment to be described comprises a railway vehicle brake actuator. The brakes on each vehicle on a train have individual brake actuators which are controlled from a common control line, in this example operation of the brakes is controlled by an electrical demand signal carried by a signal line extending the whole length of the train. The signal line is connected to each brake actuator position and, in the driver's cab, to a demand signal generating unit activated by a brake control handle to produce a control signal representing a braking level demanded by movement of the handle to a corresponding position. The demand signal, in systems of this type, may take one of several forms for example a pulse width modulated signal, a voltage, a current etc. the level of braking demanded being represented, in each case, by the variable parameter.

The particular embodiment comprises an electric motor driving, through a step-down gearbox, a screw threaded rotatable shaft engaged with a captive nut coupled to an output member which, in turn, is connected to one end of a brake operating lever. This lever is coupled, on the other side of its fulcrum, to move the brake pads or blocks themselves. Starting from a normal running position, i.e. with the brakes released, the first part of the movement of this lever is effective to bring the brake blocks into contact with a wheel by taking up the running clearance. Little resistance to movement is encountered by the lever in this phase. After rubbing contact is achieved there is no appreciable further movement of the brake blocks and the retarding force of the brakes is determined by the force with which the brake blocks are pressed against the wheels or brake discs.

This retarding force, brought about by further movement of the actuator output member, exerts a bending moment on the brake operating lever against the inherent resilience of the member. Thus, it will be appreciated that there is a non-linear relationship between the braking force and the position of the actuator output member, although movement of the output member is directly related to the angular position or degree of rotation of the electric rotary machine of the actuator.

In the described embodiment the position of the output member may be determined by several alternative methods, for example, by means of a linear position transducer, or preferably, as in the example, by a rotary position transducer (also known as a shaft encoder) responsive to rotation of the shaft of the electric motor. The output of this transducer is fed back to a comparator circuit, or difference amplifier, and is summed with the trainline demand signal to provide an input signal for the actuator electric motor.

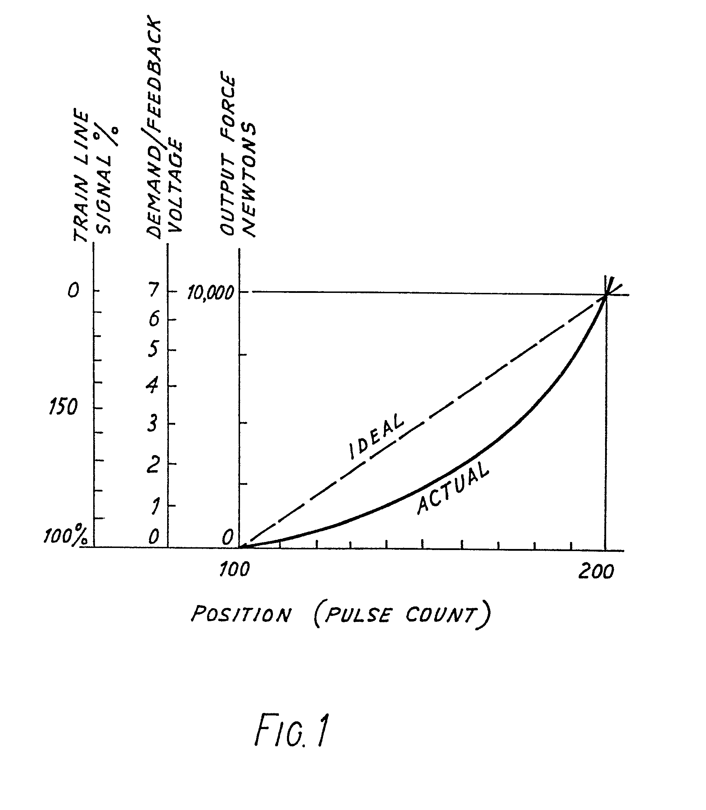

In a particular embodiment  to which Fig. 1 refers a digital rotary position encoder is driven by the electric motor shaft, and movement of the output member is indicated by a train of pulses produced by the encoder, upon rotation of the actuator shaft, so that a given movement of the output member results in a given number of pulses being generated. The graph of Fig. 1 shows the relationship between the position of the member, and therefore the pulse count, against an output force exerted by the brake operating lever on the brake blocks. It will be seen that the actual relationship is non-linear from the point at which the brake blocks contact the wheel, which occurs at pulse count position 100. Thereafter the relationship is non-linear being capable of finer control at low output forces but only capable of course control at high output forces.

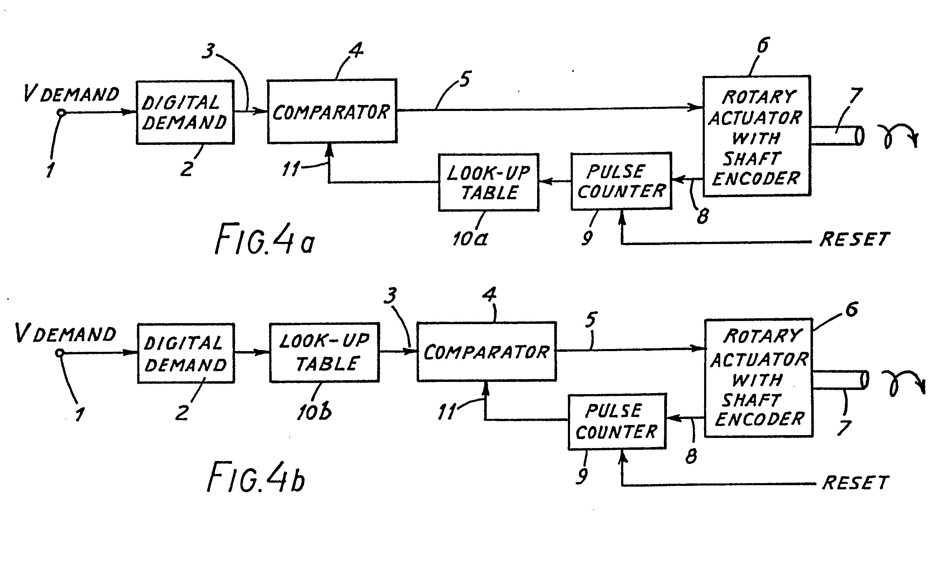

The present invention proposes to render the relationship effectively linear by modification of either the feedback signal from the position encoder to the comparator point at the actuator input or by modification of the demand signal. An arrangement for the first case is achieved by changing the relationship between the demand signal and the feedback signal by generating a substitute feedback signal, as illustrated in Fig. 4a. In an arrangement for the second case, as illustrated in Fig. 4b, the actuator loop input signal itself is modified by generating a substitute demand signal using the primary or trainline demand signal as a reference.

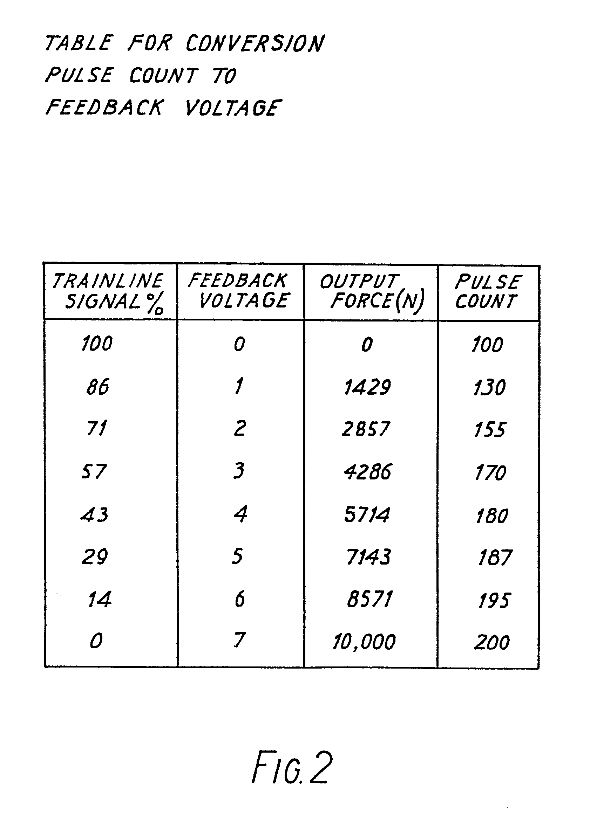

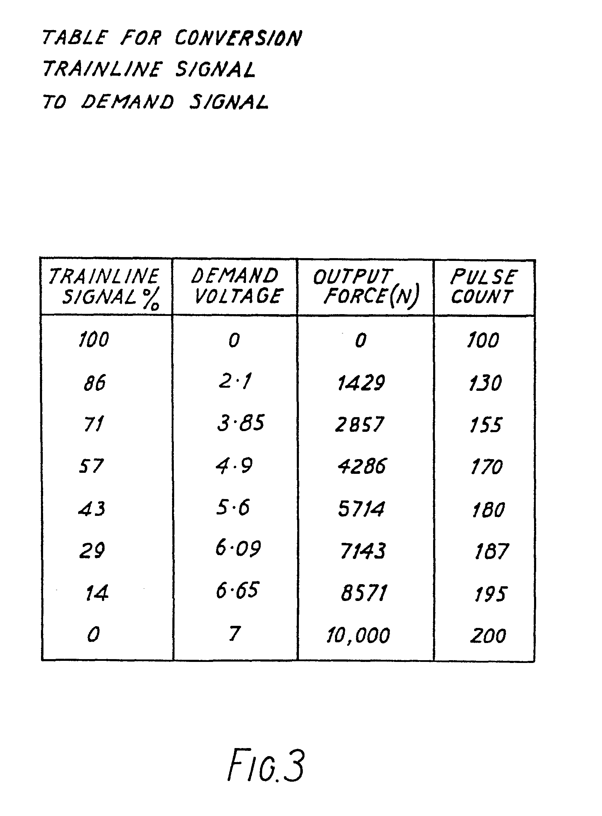

The secondary or modified signal may be computed from the primary original signal using a circuit capable of evaluating a predetermined mathematical algorithm. In the exemplary embodiment an original signal is used to generate an input address for a "look-up" table containing corresponding values for a compensated, "linearised" signal. Fig. 2 shows a simple form of "look-up" table values for compensation of an actuator feedback signal. These values plotted on the graph of Fig. 1 give the linear curve marked "ideal". The values shown in the table of Fig. 3, for comparison, show the relationship between the trainline signal and the actuator position, as represented by the shaft encoder pulse count, and give the non-linear curve marked "actual" in Fig. 1.

Positional control of the actuator output member is achieved by energising the electric motor until the desired position is reached and then stopping it. The actuator may be stopped by a brake or by merely switching off the motor if no other means of halting rotation is provided. In practice, because any real system has finite mass and cannot therefore be stopped instantaneously overshoot is inherent in all such systems. The degree of overshoot may be acceptable providing the resultant error can be tolerated by building-in sufficient hysteresis into the system.

However, it is preferred, for greater accuracy, that the actuator signal has phase advance by means of which the actuator input signal is cut-off in advance of the required position being reached sufficiently to compensate for the predicted overshoot. It is preferred not to correct for overshoot by reversing the actuator because this can lead to "hunting" and instability, and also introduces an unacceptably long time delay. One embodiment of a phase advance circuit includes monitoring of the output member position feedback signal, i.e. the pulse count, and electronically inhibiting the actuator input signal when a predetermined pulse count, in advance of the final position pulse count, is reached. This may also be achieved by using electronic logic circuits and a pulse count look-up table similar to the arrangement described above.

In one actuator system the phase advance required is proportional to the square of the rotational speed of the electric motor. In this arrangement the speed of the motor is determined by the pulse count frequency of the output rotary encoder and the stored values in the look-up table are calculated in accordance with the required formula.

Control of the actuator motor speed may be achieved by imposing a maximum limit on rate of change on the input signal. In railway braking terminology "ramping" of the brake either ON or OFF, i.e. is due by progressively changing the position of the brake control handle. It is normal for a positionally controlled system to respond in a series of steps following a progressively increasing demand signal. Unfortunately this can lead to undesirable effects of jerking as the electric actuator tends to follow in a series of steps. It is proposed in the invention to limit the rate of change of actuator output to a maximum level no greater than the most common rate of change called for in service braking, this being the so called "jerk limit". This limit is overriden when in full emergency braking is called for. Preferably the maximum motor speed is matched to the jerk limit so that the number of cycles of operation of the motor during a ramp change are kept to a minimum.

Referring now to the arrangement of Fig. 4a the trainline or brake demand voltage signal (V demand) is supplied to an input terminal 1, connected to the input of a voltage to digital signal converting circuit 2. This latter circuit may comprise, in effect, an analogue to digital converter when the brake demand signal is an analogue signal. In a system having a binary digital trainline the converter 2 may be unnecessary, although if the demand signal is binary Gray code the converter may operate to convert the signal to conventional binary unless Gray code is used throughout.

The digitised demand signal is connected to one input 3 of a comparator circuit 4, the output 5 of which is connected to a control input of a rotary actuator 6. This actuator control input is operative to energise the actuator 6 by closing switch contacts (not shown) which complete an energisation circuit including a battery and the windings of the actuator motor.

The actuator 6 has a rotary shaft encoder coupled with its output shaft 7 and arranged to produce a digital read-out in accordance with output shaft rotation. In this example this output 8 is a train of pulses produced at the rate of a predetermined number per revolution of the output shaft 7. Thus, the number of pulses produced is determined by the number of rotations of the shaft and the pulse frequency is set by the speed of rotation. The pulse train on output 8 is connected to the count input of a pulse counter 9 which provides at its output a binary digital number representing the displacement of the shaft 7, and therefore also the degree of brake application.

It is preferred to represent this displacement as from a zero or reference position. This is chosen as the point at which the brake friction pads initially make rubbing contact with the wheels or brake discs. This point is defined by operation of a microswitch disposed so as to be tripped to a closed position at the point of rubbing contact by movement of the brake shoes or a brake operating lever. Operation of the microswitch is arranged to generate a pulse which is supplied to a reset input of pulse counter 9. In this case the running clearance of the brakes is set by "winding back" the actuator for a predetermined distance, say, the distance represented by one hundred pulses.

This number is stored in a permanent memory and brought in use in the circuit when the microswitch indicates that the actuator has withdrawn to the reference position. The stored number is connected to the demand input and the actuator wound back in the usual way, it may be necessary to reset the pulse counter again at the final position in order to de-activate the actuation control system.

It is usual to incorporate an automatic slack adjuster in a railway brake system so that as the friction brake surfaces wear a constant running clearance is maintained. Thus, the output of the pulse counter 9 comprises a binary number representing the displacement of the actuator output shaft 7 from the position in which rubbing contact is established, so that this number is a function of the brake retarding force generated.

In relationship between brake force and actuator position, to a first approximation at least, is consistent and a multiplicity of values are calculated and stored in a read-on-memory which forms part of a look-up table, indicated at 10a in Fig. 4a. The actuator position number from counter 9 is used as a reference index in table 10a to look-up a number indicating the corresponding brake force, in the same representative units as the brake demand signal at input 3 of the comparator 4. This second number is supplied to a second input 11 of the comparator 4, and the latter is effective to subtract the achieved brake force from the brake force demand, the error or difference signal remaining at output 5 is connected to the actuator to control its energisation as previously described, thereby closing the control loop.

Non-linearity in this arrangement is allowed for during calculation of the contents of look-up table 10a and no non-linear compensation is required elsewhere in the circuit which therefore may be kept relatively simple in design. In Fig. 4a the whole of the functions of the comparator 4, pulse counter 9 and look-up table may be performed by a single microprocessor suitably programmed.

Fig. 4b shows an arrangement, alternative to that of Fig. 4a, but in which like parts are given like references. The basic difference between the two arrangements resides in the way that compensation is made for the non-linearity of the relationship between brake retarding force and actuator position. In Fig. 4b the brake demand input is compensated by applying a correction factor to the digital number corresponding to the demand input. Again a look-up table 10b is employed in which is indexed against each of a multiplicity of input numbers the corresponding pulse count outputs required from the actuator shaft encoder to reproduce the required brake retarding forces.

In operation of the arrangement of Fig. 4a a brake demand voltage signal is generated by a movement of a driver's brake control handle (not shown) and carried by a brake signal trainline through a train. The terminal 1 connected to the trainline receives the signal, the digital demand block 2 converts the voltage signal to binary code in accordance with the table of Fig. 3 and feeds this output to the first input 3 of the comparator 4.

Meanwhile the pulse counter 9 continues to output a binary number representing the true position of the actuator 6. This number is compensated by means of the look up table 10a for the non-linearity of the actuator operating characteristics, and the corrected signal is supplied to the second input 11 of comparator 4. The difference or error signal appearing at the output 5 of the comparator drives the actuator 6 in the sense to reduce the error signal to zero.

As the actuator is turned the shaft encoder generates a pulse train on output 8 and either increases or decreases the number from the counter 9 according to the direction of motion of the actuator. The pulse count column of the table of Fig. 2 shows how this number varies in accordance with the output force of the actuator and is shown in Fig. 1 as the curve labelled "actual", from which the non-linearity of the relationship will be immediately apparent. For comparison purposes Fig. 2 also shows the equivalent feedback voltage (in decimal) and the corresponding trainline signal in terms of % of maximum level.

The brake demand signal, that is trainline to pulse count, is shown in Fig. 1 by the plot marked "Ideal" and by the table of Fig. 2. Inspection of Fig. 1 and comparison of the tables of Fig. 2 and 3 will reveal the discrepancy between the ideal linear relationship and the true non-linear relationship. In effect, the error between these two curves indexed against pulse count is stored in the look up table 10a of Fig. 4a and in the look-up table 10b of Fig. 4b. In the arrangement of Fig. 4a the error is added to the "true" feedback pulse count so that feedback signal on comparator input 11 follows the ideal curve.

In the arrangement of Fig. 4b the error is subtracted from demand signal from block 2 so that the signal on comparator input 3 follows the "actual" curve of Fig. 1.

It will be readily appreciated by those skilled in the art that the functions of blocks 2, comparators 4, and pulse counters 9 may be performed by microprocessors or standard integrated semiconductor circuits. The look-up tables 10a and 10b may be stored in read-only memories.

Alternatively, as will be equally apparent, the circuits may be carried into practice using analogue techniques, employing continuously variable voltages rather than digital binary code representations, in which case the voltage columns of the tables of Figs. 2 and 3 indicate the orders of the errors between the "ideal" and "actual" response curves.

The pulse train output 8 from the shaft encoder has a frequency determined by the speed of rotation of the actuator and a predetermined number of pulses generated per revolution. The pulse frequency is directly proportional to actuator motor speed and is used as an input to a motor speed control circuit which operates to impose a predetermined maximum value on the actuator input control signal 5 and thereby to limit, to a corresponding predetermined value, the rate of change of actuator output. This maximum value is the "jerk limit" mentioned above.

In a system having constant mass the angular momentum at a known rotational velocity is predictable. Thus, the pulse train output from the shaft encoder is also used to determine the phase advance angle necessary to terminate the actuator input signal to bring the actuator output member up to the desired position, as called for by the demand signal, without overshoot. The pulse frequency provides the angular velocity of the actuator and from the error signal on the output 5 of the comparator 4, the remaining angle can be determined and the phase advance cut-off applied at the required point. The required angles are directly represented by a pulse count. In the case where the phase angle is proportional to the square of the rotational speed the number of pulse representing the phase angle is calculated according to the square of the pulse frequency.

Claims

1. An actuator system comprising an actuator for moving an output member in response to an actuator input signal, and wherein the output member encounters a resistance to movement over at least part of its range of travel so that there exists a non-linear relationship between a force exerted by the member against the resistance and a demand signal, sensing means responsive to the position of the output member to provide a feedback signal, means for receiving the feedback signal, means for receiving the demand signal, means operative to compensate for said non-linearity, and means for combining the feedback and demand signals to provide an error signal which is connected to provide an actuator input signal corrected in accordance with said non-linearity to produce movement of the actuator.

2. An actuator system according to Claim 1 wherein the means operative to compensate for said non-linearity is connected with the means for receiving the feedback signal in order to modify the feedback signal.

3. An actuator system according to Claim 1 wherein the means operative to compensate for said non-linearity is connected with the means for receiving the demand signal in order to modify the demand signal.

4. An actuator system according to any one of claims 1 to 3 wherein the demand and feedback signals are represented by digital numbers and the means for compensation of one of said signals is operative to substitute for an original signal the digital number corresponding to a compensated signal.

5. An actuator system according to claim 4 wherein the means for compensation includes a look-up table containing a plurality of digital numbers representing compensated signals indexed against the digital number representing a corresponding original signal.

6. An actuator system according to any preceding claim including means for producing a digital output indicative of the position of the actuator output member.

7. An actuator system according to claim 6 wherein the actuator comprises a rotary machine and the means for producing a digital output comprises a rotary shaft encoder.

8. An actuator system according to claim 7 wherein the shaft encoder is adapted to provide a pulse train output in accordance with actuator movement and said output is connected to pulse counting means which provides the digital number proportional to the position of the actuator output member.

9. An actuator system according to claim 8 including counter reset means responsive to the actuator output member reaching a predetermined reference position to generate a signal connected to reset said pulse counter.

10. An actuator system according to claim 9 wherein the counter reset means comprises switch means disposed to be operated by means connected to the acuator output member when said means is moved to a predetermined position.

11. An actuator system according to claim 10 including means to operate the actuator to withdraw from a reset position for a predetermined number of pulses.

12. An actuator system according to any one of claims 4 to 11 including means operative to advance the phase of the actuating signal in accordance with a predetermined no of pulses selected to compensate the momentum of the actuator so as to halt the output member in the position required by the input signal.

13. An actuator system according to Claim 12 wherein the phase advance means is arranged to select a number of pulses corresonding to a phase advance angle proportional to the square of the rotational speed of the actuator.

14. An actuator system according to any one of claims 4 to 13 in which there is further provided a motor speed control circuit operative to limit the rate of change of actuator output to a predetermined pulse frequency.

FIG. 1

0170478

TABLE FOR CONVERSION
PULSE COUNT TO
FEEDBACK VOLTAGE

| TRAINLINE SIGNAL % | FEEDBACK VOLTAGE | OUTPUT FORCE(N) | PULSE COUNT |
|---|---|---|---|
| 100 | 0 | 0 | 100 |
| 86 | 1 | 1429 | 130 |
| 71 | 2 | 2857 | 155 |
| 57 | 3 | 4286 | 170 |
| 43 | 4 | 5714 | 180 |
| 29 | 5 | 7143 | 187 |
| 14 | 6 | 8571 | 195 |
| 0 | 7 | 10,000 | 200 |

FIG.2

TABLE FOR CONVERSION
TRAINLINE SIGNAL
TO DEMAND SIGNAL

| TRAINLINE SIGNAL % | DEMAND VOLTAGE | OUTPUT FORCE(N) | PULSE COUNT |
|---|---|---|---|
| 100 | 0 | 0 | 100 |
| 86 | 2·1 | 1429 | 130 |
| 71 | 3·85 | 2857 | 155 |
| 57 | 4·9 | 4286 | 170 |
| 43 | 5·6 | 5714 | 180 |
| 29 | 6·09 | 7143 | 187 |
| 14 | 6·65 | 8571 | 195 |
| 0 | 7 | 10,000 | 200 |

FIG.3

**FIG.4a**

**FIG.4b**